# EUROPÄISCHE PATENTANMELDUNG

(11) **EP 4 827 049 A1**
(43) Veröffentlichungstag der Anmeldung: **21.10.2026**
(21) Anmeldenummer: 25207299.6
(22) Anmeldetag: 07.10.2025
(51) Int. Cl.: H04L 9/40

(54) **VERFAHREN ZUM VERBERGEN SICHERER KOMMUNIKATIONSKANÄLE IN NETZWERKEN**

(30) Priorität: 15.04.2025 EP 25170718; 15.04.2025 EP 25170719; 15.04.2025 EP 25170720
(71) Anmelder: Wibu-Systems AG, 76137 Karlsruhe (DE)
(72) Erfinder: Löwe, Bernhard, 76137 Karlsruhe (DE); Maier, Sven, 76137 Karlsruhe (DE)
(74) Vertreter: Durm Patentanwälte PartG mbB

(57) **Zusammenfassung**

Ein Verfahren zum Verbergen sicherer Kommunikationskanäle (36) in einem äußeren Kommunikationskanal (32) umfasst mehrere Schritte. Ein erster Proxy (60-1) empfängt sichere Kanaldaten (52) für einen sicheren Kommunikationskanal (36) zwischen einem Client (10) und einem Server (20). Diese Daten werden steganographisch in einen unauffälligen Datencontainer (54) eingefügt und in die Struktur des äußeren Kommunikationskanals (32) eingebettet. Der erste Proxy (60-1) überträgt den Datencontainer (54) mit den sicheren Kanaldaten (52) über den äußeren Kommunikationskanal (32) zu einem zweiten Proxy (60-2). Der zweite Proxy (60-2) empfängt den Datencontainer (54), extrahiert die sicheren Kanaldaten (52) und leitet diese an den beabsichtigten Empfänger weiter. Durch die steganographische Einbettung bleibt die Existenz des sicheren Kommunikationskanals (36) für Überwachungssysteme und Man-in-the-Middle-Proxys (40) verborgen, während die Integrität und Vertraulichkeit der übertragenen Informationen gewährleistet wird. Das Verfahren ermöglicht eine sichere Datenübertragung selbst in Umgebungen mit Man-in-the-Middle-Überwachung (40), ohne die Existenz des sicheren Kommunikationskanals (36) preiszugeben.

## Beschreibung

Die Erfindung betrifft ein Verfahren zum Verbergen sicherer Kommunikationskanäle in Netzwerken. Durch den Einsatz von Steganographie und Proxys ermöglicht das Verfahren eine sichere Datenübertragung, selbst in Umgebungen mit Man-in-the-Middle-Überwachung, ohne die Existenz des sicheren Kommunikationskanals preiszugeben oder die Sicherheit des Kanals einzuschränken.

In der heutigen digitalen Kommunikation stellt die Sicherheit von Datenübertragungen eine zentrale Herausforderung dar. Eine wesentliche Anforderung für Webseiten und Webanwendungen ist beispielsweise die sichere Verbindung zum richtigen Server. "Sicher" bedeutet in diesem Kontext, dass der Client sich einerseits sicher ist, dass er mit dem richtigen Server spricht und die Daten, die ausgetauscht werden von niemand anderem mitgelesen werden, verändert werden und vollständig ankommen. Obwohl moderne verschlüsselte Verbindungen effektiv verhindern, dass Angreifer Nutzdaten im Klartext lesen können, besteht weiterhin die Gefahr, dass Man-in-the-Middle-Angreifer wertvolle Informationen aus den übertragenen Metadaten extrahieren. Diese Angreifer sind in der Lage, basierend auf den beobachteten Metadaten sowohl Nutzdaten als auch Metadaten zu verändern oder zu löschen, ohne die Daten generell zu zerstören. Diese Manipulationen müssen von den beiden Kommunikationspartnern jedoch feststellbar sein.

Das Transport Layer Security (TLS) Protokoll wurde entwickelt, um genau diese Sicherheitsprobleme zu lösen. Es basiert auf einer Kombination aus asymmetrischer und symmetrischer Kryptographie, wobei der Client den öffentlichen Schlüssel des Servers kennt oder durch eine Zertifikatskette verifizieren kann. Durch ein Schlüsselaushandlungsverfahren, typischerweise einen TLS-Handshake mit Diffie-Hellman, etablieren beide Kommunikationspartner einen gemeinsamen Schlüssel, der ausschließlich ihnen bekannt ist. Digitale Signaturen gewährleisten dabei die Integrität der Nachrichten und deren Authentizität. Einem Zuhörer auf der Leitung ist es nicht oder nicht effizient möglich den Kommunikationsschlüssel zu extrahieren.

Jedoch entsteht durch diese Ende-zu-Ende-Verschlüsselung ein Dilemma für Unternehmen: Während die Verschlüsselung Vertraulichkeit und Integrität sicherstellt, verhindert sie gleichzeitig, dass Netzwerk-Firewalls die übertragenen Daten analysieren und auf schädliche Inhalte prüfen können. Unternehmen betrachten diese Einschränkung als potenzielle Gefahr für ihre IT-Sicherheit.

Als Lösungsansatz implementieren diese Unternehmen Proxyserver, die sich gegenüber dem Client als der eigentliche Zielserver ausgeben und selbständig die verschlüsselte Verbindung zum tatsächlichen Server aufbauen.

Allerdings ergibt sich durch den zunehmenden Einsatz von "Intercepting Proxies", auch als "transparente Proxies" bekannte Netzwerk-Proxy-Server, in Unternehmensumgebungen eine besondere Problematik. Diese Systeme werden als legitime Sicherheitsmaßnahme implementiert und sind so konfiguriert, dass der gesamte Datenverkehr abgefangen und dann weitergeleitet wird. Sie fungieren jedoch technisch als autorisierte Man-in-the-Middle-Vermittler. Der Mechanismus funktioniert folgendermaßen: Anstatt einer direkten verschlüsselten Verbindung zwischen Client und Server entstehen zwei separate TLS-Verbindungen - eine zwischen Client und Proxy sowie eine weitere zwischen Proxy und Server. Dadurch erhält der Proxy vollständigen Einblick in alle übertragenen Nachrichten im Klartext.

Diese Architektur führt zu einem weiteren Problem: Die Authentifizierung des Servers beim Client schlägt fehl, da der Proxy nicht über die korrekten Zertifikate verfügt. Um dieses Problem zu umgehen, werden den Clients im Unternehmensnetzwerk firmeneigene bzw. "korrumpierte" Schlüssel untergeschoben, sodass die Signaturverifikation im TLS-Handshake nicht fehlschlägt.

Bei Spezialsoftware, beispielsweise für Banken, ist jedoch das Unterschieben falscher Schlüssel technisch nicht möglich, weshalb diese Software Verbindungen ablehnt, wenn ein Man-in-the-Middle-Proxy die Verbindung unterbrochen hat. Ein naheliegender Lösungsansatz wäre die Etablierung eines weiteren verschlüsselten Kanals innerhalb des bereits über TLS aufgebauten Kanals. Jedoch erkennen moderne Proxies solche Verschachtelungsversuche und unterbrechen auch diese sekundären verschlüsselten Kanäle.

Dies führt zu einem grundlegenden Widerspruch: Unternehmen erwarten einerseits, dass alle ein- und ausgehenden Verbindungen mit TLS verschlüsselt sind, brechen aber andererseits systematisch alle TLS-Verbindungen auf. Dadurch wird es für spezialisierte Software unmöglich, eine tatsächlich sichere Verbindung herzustellen, was insbesondere in sicherheitskritischen Anwendungen wie dem Bankwesen problematisch ist.

US 8,615,795 B2 beschreibt einen Proxy-Server, der Anfragen von Netzwerkgeräten abfängt und eine sichere SSL-Verbindung zwischen dem Proxy und dem Zielserver herstellt. Der Proxy kann Identifizierungsinformationen aus den Datenpaketen entfernen oder ersetzen. Dieser Ansatz unterbricht die End-to-End-Verschlüsselung und stellt somit ein potenzielles Sicherheitsrisiko dar.

US 7,177,441 B2 beschreibt ein System zur geheimen Kommunikation durch Einbetten von Hilfsdaten in Trägerdaten wie JPEG-Bilder. Die Methode nutzt unbenutzte Huffman-Codes zur Steganographie. Ein Nachteil ist, dass diese Technik anfällig für statistische Analysen sein kann und nicht für große Datenmengen geeignet ist.

US 2009/0172171 A1 präsentiert eine Methode zur Tarnung von Kommunikationssitzungen durch Verteilung von Daten über mehrere Proxy-Netzwerkknoten. Die Methode zielt darauf ab, mindestens eine Charakteristik der Kommunikationssitzung vor Inspektionseinheiten zu verbergen. Ein Nachteil dieses Ansatzes ist der erhöhte Overhead durch die Verwendung mehrerer Proxys und das Einführen von Latenz in die Kommunikation.

Basierend auf den beschriebenen Problemen ergibt sich die Aufgabe, ein Verfahren und System zu entwickeln, das eine sichere Kommunikation zwischen Client und Server ermöglicht, auch wenn ein Man-in-the-Middle-Proxy die Verbindung überwacht oder manipuliert.

Gelöst wird die vorliegende Erfindung durch ein Verfahren mit den Merkmalen des Anspruchs 1 und durch ein System mit den Merkmalen des Anspruchs 10 sowie durch einen Proxy mit den Merkmalen des Anspruchs 15.

Gemäß einem ersten Aspekt betrifft die Erfindung ein Verfahren zum Verbergen sicherer Kommunikationskanäle in einem äußeren Kommunikationskanal. Das Verfahren umfasst mehrere Schritte, die im Folgenden beschrieben werden.

In einem Schritt erfolgt das Empfangen von sicheren Kanaldaten. Diese Daten sind für einen sicheren Kommunikationskanal zwischen einem Client und einem Server bestimmt. In einem weiteren Schritt erfolgt das steganographische Einfügen der sicheren Kanaldaten in einen unauffälligen Datencontainer. In einem anderen Schritt wird der unauffällige Datencontainer in die Struktur des äußeren Kommunikationskanals eingebettet. Diese Schritte können bevorzugt in dem einem Proxy erfolgen.

In einem weiteren Schritt wird der unauffällige Datencontainer, der die sicheren Kanaldaten enthält, übertragen. Die Übertragung erfolgt bevorzugt durch den ersten Proxy über den äußeren Kommunikationskanal zu einem zweiten Proxy.

In einem anderen Schritt wird der unauffällige Datencontainer über den äußeren Kommunikationskanal empfangen. Ein anderer Schritt sieht ein Extrahieren der sicheren Kanaldaten vor, in dem die Daten aus dem unauffälligen Datencontainer gewonnen werden. In einem zusätzlichen Schritt erfolgt das Weiterleiten der extrahierten sicheren Kanaldaten. Hier werden die Daten an einen beabsichtigten Empfänger übermittelt. Diese Schritte können bevorzugt in dem zweiten Proxy erfolgen.

Gemäß einem zweiten Aspekt betrifft die Erfindung ein System zum Verbergen sicherer Kommunikationskanäle. Das System umfasst einen ersten Proxy und einen zweiten Proxy, die miteinander über einen äußeren Kommunikationskanal kommunizieren. Sie arbeiten zusammen, um eine sichere Datenübertragung vom Client zum Server zu ermöglichen, bei der die Existenz des geschützten Kommunikationskanals vor dem transparenten Proxy verborgen bleibt.

Der erste Proxy ist konfiguriert zum Durchführen mehrerer Funktionen, die für die Initiierung des sicheren Kommunikationsprozesses entscheidend sind. Der erste Proxy ist konfiguriert zum Empfangen von Daten für einen sicheren Kommunikationskanal zwischen einem Client und einem Server, zum steganographischen Einfügen der sicheren Kanaldaten in einen unauffälligen Datencontainer, zum Einbetten des Datencontainers in die Struktur des äußeren Kommunikationskanals und zum Übertragen des Datencontainers über den äußeren Kommunikationskanal.

Der zweite Proxy ist konfiguriert zum Empfangen des unauffälligen Datencontainers über den äußeren Kommunikationskanal, zum Extrahieren der sicheren Kanaldaten aus dem Datencontainer und zum Weiterleiten der extrahierten sicheren Kanaldaten an einen beabsichtigten Empfänger. Der zweite Proxy kehrt somit die steganographische Einbettung um und gewinnt die ursprünglichen sicheren Daten zurück. Die extrahierten sicheren Kanaldaten werden dann an einen beabsichtigten Empfänger weitergeleitet, wodurch der sichere Kommunikationsprozess abgeschlossen wird.

Gemäß einem dritten Aspekt betrifft die Erfindung einen Proxy-Server für ein System zum Verbergen sicherer Kommunikationskanäle, der ein Receiver-Modul, ein Steganographie-Modul und/oder ein Einbett-Modul und ein Transmitter-Modul umfasst. Das Receiver-Modul ist dazu eingerichtet, sichere Kanaldaten für einen sicheren Kommunikationskanal zu empfangen. Das Steganographie-Modul ist dazu eingerichtet, die sicheren Kanaldaten in einen unauffälligen Datencontainer einzufügen und zu verschleiern. Das Einbett-Modul ist eingerichtet, um den unauffälligen Datencontainer in die Struktur des äußeren Kommunikationskanals einzubetten, und das Transmitter-Modul ist dazu eingerichtet, den unauffälligen Datencontainer mit den sicheren Kanaldaten über den äußeren Kommunikationskanal zu übertragen.

Ein weiterer Aspekt der Erfindung betrifft ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Im Detail funktioniert die Erfindung durch eine zweistufige Architektur, bei der bevorzugt der erste Proxy als Eingangspunkt für die zu schützenden Daten dient. Dieser Proxy verwendet steganographische Techniken, um die vertraulichen Informationen bzw. Daten, bevorzugt in Form eines Datencontainers, in harmlos erscheinende, unauffällige Trägerdaten wie Bilder, Dokumente oder strukturierte Datenformate einzubetten. Nachdem der Datencontainer in die Struktur des äußeren Kommunikationskanals eingebettet ist, werden die so getarnten Daten über die äußere Verbindung übertragen, die sich vom Protokoll des sicheren Kanals unterscheiden kann. Der zweite Proxy empfängt diese getarnten Daten, extrahiert die verborgenen sicheren Kanaldaten und leitet sie an den eigentlichen Empfänger weiter. Durch diese Methode bleibt die Existenz des sicheren Kommunikationskanals für Überwachungssysteme und Man-in-the-Middle-Proxys verborgen, während die Integrität und Vertraulichkeit der übertragenen Informationen gewährleistet wird.

Als "Struktur des äußeren Kommunikationskanals" wird die protokollspezifische Datenorganisation des Übertragungskanals bezeichnet, einschließlich Header-Bereiche, Datenfelder und protokollspezifische Strukturelemente, in welche der unauffällige Datencontainer eingebettet werden kann. Beispiele sind alle Protokolle ab Layer 5, wie etwa TLS-Protokolle, HTTP-Protokolle, HTTPS-Protokolle oder SMTP-Protokolle o.ä. Eine Erweiterung auf Protokolle niedrigerer Layer, wie etwa Layer 4, also z.B. TCP oder UDP, oder Layer 3, also z.B. IPsec, ist denkbar.

Der erste und der zweite Proxy können vom Aufbau her gleich sein und/oder jeweils so konfiguriert sein, dass sie jeweils die entsprechenden Funktionen des ersten und zweiten Proxys ausführen. Dies erfolgt abhängig davon, ob der Proxy am Beginn der Kommunikationsverbindung oder an deren Ende eingesetzt wird. Bei einer Hin-Kommunikation vom Client zum Server ist der clientseitige Proxy der erste Proxy und der serverseitige Proxy der zweite Proxy. Bei der Rück-Kommunikation vom Server zum Client ist es umgekehrt.

Die Architektur ermöglicht auch eine angepasste Kontrolle über die Datenübertragung. Verschiedene Arten von Daten können mit unterschiedlichen Steganographie-Techniken automatisch behandelt werden, je nach Sicherheitsanforderungen, Größe der zu tarnenden Datenmenge und verfügbaren Trägerdatenformaten.

Ein Vorteil besteht in der Möglichkeit, die Lösung schrittweise zu implementieren. Unternehmen können das System zunächst für besonders sensible Kommunikation einsetzen und später auf weitere Anwendungsbereiche ausweiten.

Als "unauffälliger Datencontainer" wird ein Datenformat oder eine Datenstruktur bezeichnet, die zur steganographischen Einbettung von sicheren Nachrichten oder Informationen oder Kanaldaten geeignet ist und dabei eine harmlose oder gewöhnliche Erscheinung aufweist. Der unauffällige Datencontainer dient als Trägerdatenstruktur, in welche die zu verbergenden sicheren Kanaldaten eingebettet werden können, ohne dass die Existenz der versteckten Informationen für einen Beobachter erkennbar ist.

Der unauffällige Datencontainer kann verschiedene Formen annehmen, einschließlich aber nicht beschränkt auf Bilddateien, wie Bitmap-Dateien, Dokumentdateien, Videodateien, Audiodateien oder strukturierte Datenformate. In einigen Ausführungsformen kann der Datencontainer auch Daten in Form von SOAP-Requests oder Session-Token umfassen, bevorzugt in verschlüsselter Form.

Die Auswahl des unauffälligen Datencontainers erfolgt derart, dass die eingebetteten sicheren Kanaldaten nicht effizient durch statistische Analysen oder andere Erkennungsverfahren identifiziert werden können. Der Datencontainer weist vorzugsweise Bereiche mit hoher Entropie oder Rauschcharakteristika auf, in welche die sicheren Daten eingebettet werden können, ohne die äußere Erscheinung oder Funktionalität des Containers wesentlich zu verändern.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung in den abhängigen Ansprüchen beschriebenen Ausgestaltungen ausgeführt sein.

In einer bevorzugten Ausführungsform des Verfahrens umfasst der unauffällige Datencontainer mindestens ein Element der folgenden, nicht abschließenden Gruppe: eine Bilddatei, wie Bitmap-Datei, eine Dokumentdatei, eine Videodatei, eine Audiodatei oder ein strukturiertes Datenformat, Daten in Form von SOAP-Requests oder als Session-Token, bevorzugt in verschlüsselter Form. Weitere andere Elemente sind möglich, wie etwa Datenströme o.ä. Diese Vielfalt an möglichen Trägerdaten erhöht die Flexibilität des Verfahrens und erschwert die Erkennung des versteckten Kommunikationskanals erheblich. Durch die Verwendung verschiedener Datenformate können unterschiedliche Übertragungswege und Kommunikationskanäle genutzt werden, was die Anpassungsfähigkeit an verschiedene Netzwerkumgebungen verbessert. Besonders vorteilhaft ist die Möglichkeit, alltägliche Datenübertragungen wie Webseitenanfragen oder Mediendateien als Träger zu nutzen, wodurch der sichere Kanal in regulärem Datenverkehr nahezu "unsichtbar" wird, da sie in anderen, regulären Daten versteckt sind und deshalb nicht wahrgenommen und erkannt werden.

Vorzugsweise umfasst die äußere Verbindung ein Protokoll, das sich von einem Protokoll des sicheren Kommunikationskanals unterscheidet. Dies bietet den Vorteil, dass die Übertragung der getarnten Daten unauffälliger erfolgen kann und somit die Wahrscheinlichkeit einer Entdeckung weiter reduziert wird. Darüber hinaus bieten die unterschiedlichen Protokolle eine höhere Flexibilität der Übertragung an den Server bei bevorzugt gleichbleibendem Protokoll der inneren sicheren Verbindung. Diese kann unabhängig von der äußeren Verbindung sein.

In einer vorteilhaften Ausgestaltung des Verfahrens werden die sicheren Kanaldaten vor dem steganographischen Einbetten in den unauffälligen Datencontainer verschlüsselt. Diese zusätzliche Sicherheitsebene erhöht den Schutz der übertragenen Informationen, selbst wenn die Steganographie entdeckt werden sollte. Zudem wird die Vertraulichkeit der Daten auch bei einer erfolgreichen Extraktion aus dem Datencontainer gewahrt.

Eine bevorzugte Ausführungsform des Verfahrens sieht vor, dass der sichere Kommunikationskanal eine Transport Layer Security (TLS) Verbindung und/oder eine HTTP-Verbindung oder -Protokoll oder eine HTTPS-Verbindung oder -Protokoll oder ein SMTP-Protokoll umfasst oder nutzt. Die Verwendung von standardisierten Protokollen gewährleistet eine hohe Kompatibilität und Zuverlässigkeit des Systems. Zudem ermöglicht die Flexibilität bei der Protokollwahl eine optimale Anpassung an verschiedene Netzwerkumgebungen und Sicherheitsanforderungen und verringert so das Risiko, dass die eingebetteten Daten entdeckt werden.

Eine Komponente des sicheren Kommunikationskanals kann die TLS-Verbindung als standardisiertes Protokoll für verschlüsselte Kommunikation sein, welches eine sichere Verbindung zwischen zwei Endpunkten durch kryptografische Verfahren herstellt. In der vorliegenden Erfindung wird bevorzugt die TLS-Verbindung durch die steganographische Einbettung vor Erkennung geschützt, wodurch ein zusätzliches Sicherheitsniveau erreicht wird.

Im Gegensatz zu herkömmlichen Ansätzen, bei denen ein verschachtelter TLS-Kanal von einem Man-in-the-Middle-Angreifer erkannt und blockiert werden kann, macht die erfindungsgemäße Technologie den Inhalt des äußeren Kanals für Überwachungssysteme ununterscheidbar von normalem, unverschlüsseltem Datenverkehr. Dies wird durch die Integration der sicheren Kanaldaten in unauffällige Datencontainer erreicht, die keine erkennbaren Muster oder Signaturen aufweisen, die auf eine verschlüsselte Kommunikation hindeuten.

In einer weiteren vorteilhaften Ausgestaltung des Verfahrens werden die sicheren Kanaldaten auf eine Vielzahl von unauffälligen Datencontainern, bevorzugt in Form von Datenpaketen, verteilt. Diese Verteilung der Daten erhöht die Sicherheit, da es für potenzielle Angreifer schwieriger wird, die vollständige Nachricht zu rekonstruieren. Darüber hinaus ermöglicht diese Methode eine effizientere Übertragung größerer Datenmengen über mehrere kleinere Pakete.

In einer bevorzugten Ausführungsform des Verfahrens erfolgt das Einbetten des unauffälligen Datencontainers in einen Header eines Datenprotokolls des äußeren Kommunikationskanals, bevorzugt in den Header eines HTTP-Protokolls, besonders bevorzugt in einen Authorization-Header. Optional kann ein Verschlüsselungsschlüssel oder ein sonstiger, bevorzugt eindeutiger und unveränderbarer Identifikator bei einem verschlüsselten Datencontainer oder verschlüsselten sicheren Daten in dem Datencontainer in einen per Kommunikationskanal zu übertragenden Request oder in einem Header eingebettet werden. Alternativ kann der unauffällige Datencontainer in eine Antwort in einem Datenprotokoll des äußeren Kommunikationskanals eingebettet werden, bevorzugt in eine HTTP-Antwort zur Übertragung mittels HTTP-Protokoll und einem angepassten HTTP-Header.

Diese Implementierung bietet den Vorteil, dass die versteckten Daten in standardisierten Protokollstrukturen übertragen werden, die in normalen Netzwerkumgebungen alltäglich sind und daher keine Aufmerksamkeit erregen. Darüber hinaus ermöglicht die Verwendung von HTTP-Headern eine effiziente Integration in bestehende Webanwendungen ohne Änderung der grundlegenden Kommunikationsarchitektur.

In einer weiteren bevorzugten Ausführungsform wird der Datencontainer in eine Datenstruktur mit möglichst hoher Entropie eingefügt oder in einen Bereich der Datenstruktur, die Rauschen umfasst, bevorzugt bei Bildern in den unteren Bits des Bildes, die das Rauschen kennzeichnen. Diese Methode nutzt die natürlichen Eigenschaften von Datenformaten aus, um die eingebetteten Informationen zu verschleiern. Der Vorteil dieser Technik liegt darin, dass die steganographische Einbettung statistisch schwer erkennbar wird, da sie sich in Bereichen mit bereits hoher Zufälligkeit versteckt, wodurch die Wahrscheinlichkeit einer Entdeckung durch automatisierte Analyseverfahren erheblich reduziert wird.

Als "Entropie" wird im Kontext dieser Erfindung ein Maß für die Unvorhersagbarkeit oder Zufälligkeit von Daten in einem digitalen System bezeichnet. Entropie beschreibt den Grad der Unordnung oder Informationsdichte in einer Datenstruktur, wobei höhere Entropie eine größere Zufälligkeit und damit eine geringere Vorhersagbarkeit der Datenverteilung bedeutet.

In der Informationstheorie wird Entropie als quantitatives Maß für den Informationsgehalt verwendet. Daten mit hoher Entropie weisen eine gleichmäßige Verteilung verschiedener Werte auf, während Daten mit niedriger Entropie repetitive Muster oder vorhersagbare Strukturen enthalten. Bei der steganographischen Einbettung sind Bereiche mit hoher Entropie deshalb besonders geeignet, da Änderungen in solchen Bereichen weniger auffällig sind und schwerer durch statistische Analysen erkannt werden können. Grundsätzlich ist es von Vorteil, wenn die eingebetteten Daten statistisch ununterscheidbar von "echten" Daten sind.

Praktische Beispiele für Bereiche mit hoher Entropie umfassen das Bildrauschen in digitalen Fotografien, komprimierte Audiodaten oder verschlüsselte Datenströme. In diesen Bereichen können zusätzliche Informationen eingebettet werden, ohne dass die statistischen Eigenschaften der ursprünglichen Daten signifikant verändert werden. Dies macht die Erkennung der versteckten Daten durch automatisierte Überwachungssysteme erheblich schwieriger.

Die Auswahl von Einbettungsbereichen mit hoher Entropie stellt einen bevorzugten Aspekt der erfindungsgemäßen Steganographie-Technik dar, da sie die Wahrscheinlichkeit einer Entdeckung minimiert und gleichzeitig die Integrität der Trägerdaten bewahrt.

Vorzugsweise umfasst das System einen ersten Lastverteiler, der konfiguriert ist, eingehende unauffällige Datencontainer mit sicheren Kanaldaten auf eine Vielzahl von Proxys zu verteilen. Bevorzugt hat das System einen zweiten Lastverteiler, der konfiguriert ist, eingehende sichere Kanaldaten auf eine Vielzahl von Proxys zu verteilen. Diese Lastverteilung verbessert die Skalierbarkeit und Leistungsfähigkeit des Systems, insbesondere bei hohem Datenaufkommen. Zudem erhöht die Verteilung auf mehrere Proxys die Ausfallsicherheit des Gesamtsystems.

In einer bevorzugten Ausführungsform des Systems ist der erste Proxy ferner konfiguriert, die sicheren Kanaldaten zu verschlüsseln und gegebenenfalls zu signieren, bevor sie steganographisch in den unauffälligen Datencontainer eingebettet werden. Diese zusätzliche Verschlüsselung bietet eine weitere Sicherheitsebene und schützt die Daten selbst bei einer möglichen Entdeckung der Steganographie. Die Verschlüsselung vor dem Einbetten erhöht außerdem die Entropie der Daten, was die steganographische Tarnung verbessert.

Eine vorteilhafte Ausgestaltung des Systems sieht vor, dass das System mindestens einen ersten Server oder einen Client-Computer in Kommunikation mit dem ersten Proxy und mindestens einen zweiten Server oder Client-Computer in Kommunikation mit dem zweiten Proxy umfasst. Diese Architektur ermöglicht eine flexible und skalierbare Implementierung des Systems, die an verschiedene Netzwerkumgebungen angepasst werden kann. Die Trennung zwischen Client- und Serverseite erhöht zudem die Sicherheit durch Isolation der Kommunikationsendpunkte.

In einer bevorzugten Ausgestaltung des Steganographie-Moduls des Proxys oder des Systems ist das Steganographie-Modul dazu eingerichtet, empfangene Datencontainer zu extrahieren oder zu entpacken und die sicheren Kanaldaten aus dem Datencontainer herauszulesen. Diese werden bevorzugt an den bestimmten Empfänger mittels des Transmitter-Moduls weitergeleitet. Das Steganographie-Modul ist bevorzugt also zum steganographischen Einfügen der sicheren Kanaldaten in den unauffälligen Datencontainer und zum Extrahieren der sicheren Kanaldaten aus dem unauffälligen Datencontainer eingerichtet und konfiguriert.

In einer weiteren Ausführungsform ist das Computerprogrammprodukt so konfiguriert, dass die Anweisungen das System veranlassen, den ersten Proxy oder den zweiten Proxy zu implementieren. Dies ermöglicht eine flexible Bereitstellung der Lösung auf verschiedenen Teilen der Netzwerkinfrastruktur.

Das erfindungsgemäße System basiert auf einer spezifischen modularen Architektur, bei der jeder Proxy aus vier spezialisierten Komponenten (Modulen) besteht.

Das Receiver-Modul fungiert als Empfänger und ist dazu eingerichtet, Nachrichten aus der inneren Verbindung abzufangen. In der Vorwärtsrichtung (von einem Sender oder Client in Richtung Netzwerk und Man-in-the-Middle) empfängt das Receiver-Modul des clientseitigen Proxys (am Sender) die sicheren Kanaldaten für den sicheren Kommunikationskanal zwischen Client und Server. Das Receiver-Modul des serverseitigen Proxys (am Empfänger) empfängt Nachrichten von jenseits des Man-in-the-Middle und vom Man-in-the-Middle selbst. In der Rückwärtsrichtung (von dem Netzwerk und Man-in-the-Middle in Richtung Empfänger oder Server) erfolgt es vice versa.

Das Steganographie-Modul ist dazu eingerichtet, die sicheren Kanaldaten in einen unauffälligen Datencontainer einzufügen und zu verschleiern. Das Steganographie-Modul bettet die abgefangenen Nachrichten über steganographische Techniken in unauffällige Nachrichten (Datencontainer) ein. Das Steganographie-Modul kann verschiedene Datencontainer nutzen, je nachdem, welche Struktur die Metadaten am besten verschleiert. In der Rückwärtsrichtung extrahiert das Steganographie-Modul die tatsächliche innere Verbindungsnachricht aus den empfangenen Daten, also aus dem Datencontainer.

Das Einbett-Modul ist dazu eingerichtet, den unauffälligen Datencontainer in die Struktur des äußeren Kommunikationskanals einzubetten. Bevorzugt bettet das Einbett-Modul die vom Steganographie-Modul erzeugten Datencontainer in eine äußere Verbindung ein, die vom Man-in-the-Middle abgefangen und inspiziert werden kann. Der vom Steganographie-Modul ausgegebene Datencontainer wird vom Einbett-Modul in ein kompatibles Datenformat eingebettet und für die Übertragung über die entsprechende Transportschicht der Verbindung oder des Kanals vorbereitet.

Das Transmitter-Modul ist dazu eingerichtet, den unauffälligen Datencontainer mit den sicheren Kanaldaten über den äußeren Kommunikationskanal zu übertragen. Da keine Spuren der inneren Verbindung erkennbar sind, erscheinen die Nachrichten dem Man-in-the-Middle harmlos und werden nicht verändert oder verworfen. Das Transmitter-Modul sendet dann die Nachricht weiter an den vorgesehenen Empfänger.

Die Erfindung ermöglicht eine bidirektionale Kommunikation und berücksichtigt dabei sowohl die Vorwärts- als auch die Rückwärtsrichtung der Kommunikation. In der Vorwärtsrichtung fängt der erste Proxy die Nachricht aus der inneren Verbindung ab und bettet sie über das Steganographie-Modul in unauffällige Nachrichten ein. Diese werden dann über die äußere Verbindung übertragen, die vom Man-in-the-Middle inspiziert werden kann, ohne dass Spuren der inneren Verbindung erkennbar sind.

Die Rückwärtsrichtung funktioniert analog mit vertauschten Rollen: Der zweite Proxy empfängt Nachrichtenfragmente vom Server über seinen Empfänger, bettet sie mit dem Steganographie-Modul ein und überträgt die Nachricht über sein Transmitter-Modul an den Man-in-the-Middle. Der erste Proxy extrahiert dann die innere Verbindungsnachricht und leitet sie zurück an den Client weiter. Diese bidirektionale Funktionalität gewährleistet eine vollständige und transparente Kommunikation zwischen den ursprünglichen Endpunkten.

Durch eine geeignete und an den Einsatz angepasste Gestaltung der Datencontainer gewährleisten das Verfahren und System, dass die Datenwiederherstellung robust gegen Garantien bleibt, die nicht von der Transportschicht abgedeckt werden und die vom Einbettungsmodul verwendet wird. Das System ist so konzipiert, dass es auch dann funktioniert, wenn die äußere Verbindung andere Eigenschaften oder Beschränkungen aufweist als die ursprüngliche innere sichere Verbindung. Die Robustheit wird durch sorgfältige Auswahl der Steganographie-Techniken und Datencontainer erreicht, die mit den Eigenschaften des gewählten Transportprotokolls kompatibel sind.

Die Daten der Protokollnachrichten können vor der steganographischen Einbettung verschlüsselt und signiert werden. Der vom Empfänger für die Entschlüsselung und Verifikation benötigte Schlüssel kann bereits den Proxys des Senders und Empfängers als Pre-Shared Key bekannt sein. Diese PSK-Mechanismen ermöglichen eine sichere Verschlüsselung ohne die Notwendigkeit eines komplexen Schlüsselaustauschs während der Laufzeit. Die PSK-Schlüssel-Identifikation kann ebenfalls mit steganographischen Techniken verschleiert werden, um die Sicherheit weiter zu erhöhen.

Alternativ zu Pre-Shared Keys kann das System auch dynamische Schlüsselaustausch- oder Schlüsselvereinbarungsverfahren implementieren. Diese Mechanismen ermöglichen es, dass sich die Kommunikationspartner zur Laufzeit auf gemeinsame Verschlüsselungsschlüssel einigen, ohne dass diese vorab bekannt sein müssen. Der Schlüsselaustausch, die Schlüsselvereinbarung oder die Übertragung der PSK-Schlüssel-Identifikation können ebenfalls mit steganographischen Techniken verschleiert werden, um zu verhindern, dass ein Man-in-the-Middle die Schlüsselverhandlung erkennt oder manipuliert. Dies bietet zusätzliche Flexibilität und Sicherheit, insbesondere in dynamischen Netzwerkumgebungen, wo vorab geteilte Schlüssel nicht praktikabel sind.

Einige Beispiele für eine steganographische Einbettung werden im Folgenden aufgezeigt. Eine besonders effektive Methode nutzt die Least Significant Bits in Bitmap-Dateien. Bei dieser Technik werden die zu versteckenden Daten in die niederwertigsten Bits der Farbwerte einzelner Pixel eingebettet. Da diese Bits den geringsten Einfluss auf die visuelle Erscheinung des Bildes haben, bleiben Änderungen für das menschliche Auge praktisch unsichtbar. Die Methode nutzt die natürliche Variabilität und das Rauschen in digitalen Bildern aus, um die eingebetteten Daten zu verschleiern. Besonders vorteilhaft ist diese Technik bei Bildern mit hoher Farbtiefe und natürlichen Texturen, da hier die statistischen Eigenschaften der ursprünglichen Daten erhalten bleiben und somit eine Erkennung durch automatisierte Analyseverfahren erschwert wird.

Simple Object Access Protocol (SOAP) Requests haben strukturierte Daten und bieten eine steganographische Einbettung von Daten in verschlüsselter Form als Session-Token. Diese Token, die normalerweise zur Authentifizierung und Sitzungsverwaltung dienen, können so modifiziert werden, dass sie zusätzliche versteckte Informationen enthalten. Die sicheren Kanaldaten werden dabei beispielsweise in die Struktur der Session-Token eingebettet. Sie erscheinen für Überwachungssysteme weiterhin als normale Authentifizierungsdaten. Aufgrund der hohen Entropie der Token bleibt auch eine hohe Entropie der Kanaldaten unauffällig. Diese Methode ist besonders effektiv, da SOAP-basierte Webservices in Unternehmensumgebungen weit verbreitet sind und Session-Token als gängiger Bestandteil der Kommunikation betrachtet werden.

Die Einbettung in HTTP-Header oder HTTPS-Header bietet vielfältige Möglichkeiten zur Verschleierung sicherer Kanaldaten. Der Authorization-Header und Proxy-Authorization-Header können so modifiziert werden, dass sie neben den eigentlichen Authentifizierungsinformationen zusätzliche versteckte Daten umfassen. Bedingte Anfrage-Header wie If-Match und If-None-Match sowie der ETag-Header bieten aufgrund ihrer variablen Struktur besonders gute Möglichkeiten zur Dateneinbettung, da diese Header naturgemäß unterschiedliche und scheinbar zufällige Werte aufweisen können.

Cookies stellen einen weiteren effektiven Träger für steganographische Kanaldaten dar. Die Struktur von Cookies erlaubt es, zusätzliche Informationen in scheinbar normale Session-Daten oder Tracking-Informationen einzubetten. Da Cookies routinemäßig zwischen Client und Server ausgetauscht werden und oft komplexe, kodierte Werte enthalten, fallen zusätzlich eingebettete Daten nicht auf. Besonders vorteilhaft ist die Verwendung von verschlüsselten oder Base64-kodierten Cookie-Werten mit hoher Entropie.

HTTP POST-Requests sind ebenfalls für die steganographische Einbettung geeignet. Die Formulardaten oder JSON-Strukturen können so modifiziert werden, dass sie zusätzliche versteckte Informationen enthalten, ohne ihre ursprüngliche Funktionalität zu beeinträchtigen. Besonders effektiv ist die Einbettung in multipart/form-data Strukturen, die bei Datei-Uploads verwendet werden, da diese große Datenmengen und komplexe Strukturen aufweisen.

Der praktischen Umsetzung des Systems liegen spezifische technische Anpassungen zugrunde, die in verschiedenen Netzwerkumgebungen und Anwendungsszenarien berücksichtigt werden können.

Die Implementierung des Systems kann durch Load Balancer erweitert werden, die eine besondere Verbindungsstrategie verwenden. Eine Sticky Connection stellt sicher, dass alle Nachrichten von demselben Client konsequent an denselben Proxy weitergeleitet werden. Diese Verbindungsaffinität vereinfacht die Implementierung, da der Zustand der steganographischen Kommunikation auf einem einzelnen Proxy konzentriert bleibt. Diese Konfiguration erleichtert die Entwicklung und Wartung des Systems. Das System kann auch ohne Sticky Connections funktionieren, jedoch mit einer komplexeren Zustandsverwaltung zwischen mehreren Proxy-Instanzen.

Die asymmetrische Kommunikation zwischen Client und Server erfordert unterschiedliche steganographische Ansätze für beide Richtungen. In der Client-zu-Server-Richtung senden Clients typischerweise kleinere Datenmengen, wie Anfragen, Formulardaten, Parameter oder Kommandos. Sie können effizient in HTTP-Header-Feldern versteckt werden, beispielsweise durch symmetrische Verschlüsselung der Daten und deren Einbettung in den Authorization-Header. Die begrenzte Größe macht es möglich, die gesamte Client-Nachricht in einem einzigen Header-Feld zu verstecken.

In der Server-zu-Client-Richtung hingegen übertragen Server häufig größere Datenmengen, wie Webseiteninhalte, Dokumente oder multimediale Inhalte, die sich nicht für Header-Felder eignen. Deshalb werden größere Container wie Bilder, Dokumente oder andere Mediendateien verwendet. Sie können als gültige HTTP-Antworten übertragen werden, wobei die verborgenen Nachrichten in die Struktur der Trägerdateien eingebettet sind. Diese asymmetrische Behandlung optimiert sowohl die Effizienz als auch die Unauffälligkeit der steganographischen Übertragung, da jede Richtung die für sie am besten geeigneten Versteckmethoden nutzen kann.

Die Implementierung berücksichtigt auch, dass verschiedene Anwendungstypen unterschiedliche Datenverteilungen aufweisen können. Während Web-Browsing typischerweise kleine Anfragen und große Antworten erzeugt, können andere Anwendungen wie File-Uploads oder Peer-to-Peer-Kommunikation andere Muster aufweisen, die entsprechend angepasste steganographische Strategien erfordern.

Eine besonders elegante Implementierungstechnik nutzt die Namen von angeforderten Bilddateien zur Übertragung von Verschlüsselungsschlüsseln. Dabei wird der Verschlüsselungsschlüssel nicht direkt übertragen, sondern als Urbild einer Hash-Funktion kodiert. Der Bildname wird so gewählt, dass sein Hash-Wert dem gewünschten Schlüssel entspricht oder diesen ableiten lässt. Diese Methode bietet mehrere Vorteile: Erstens erscheinen die Bildnamen für Überwachungssysteme völlig normal und erregen keine Aufmerksamkeit. Zweitens weisen sowohl die Hash-Werte als auch die daraus resultierenden Bildnamen eine hohe Entropie auf, was die Erkennung durch statistische Analysen erschwert. Drittens ermöglicht diese Technik eine effizientere Schlüsselübertragung ohne explizite Verschlüsselung der Schlüsselinformationen selbst.

Die vorliegende Erfindung unterscheidet sich fundamental von bestehenden Sicherheitslösungen durch ihre einzigartige Herangehensweise an die Verschleierung sicherer Kommunikationskanäle.

Herkömmliche Ansätze wie Virtual Private Networks (VPNs) oder verschachtelte TLS-Verbindungen versuchen, einen sicheren Kanal innerhalb eines anderen sicheren Kanals zu verstecken. Das TLS-Protokoll erlaubt es zwar, einen TLS-Kanal in einen anderen TLS-Kanal zu kapseln. Jedoch könnte ohne die erfindungsgemäße Technologie ein Dritter erkennen, ob ein weiterer verschlüsselter Kanal innerhalb des äußeren TLS-Kanals existiert. Die Erkennbarkeit macht solche Lösungen anfällig für ein Blockieren oder Manipulieren durch Man-in-the-Middle.

Erfindungsgemäß ist hingegen der Inhalt des äußeren Kanals nicht von normalem, unverschlüsseltem Verkehr zu unterscheiden. Die steganographische Einbettung sorgt dafür, dass unverschlüsselte Daten beziehungsweise unverschlüsselte Anfragen und Antworten für Überwachungssysteme völlig harmlos erscheinen, während sie tatsächlich sichere Kanaldaten enthalten.

Ein weiterer Unterschied liegt in der universellen Anwendbarkeit der Erfindung. Das System kann die grundlegenden Protokolle als Black-Box verwenden, ohne protokollspezifische Anpassungen. Beliebige Protokolldaten wie HTTP, TLS oder andere Standard- oder proprietäre Protokolle können in jedes andere Protokoll umgewandelt werden. Das äußere Protokoll muss nur etwas mehr Daten als das ursprüngliche Datenpaket der inneren Verbindung aufnehmen und übertragen können. Dies ermöglicht eine nahtlose Integration in bestehende Kommunikationsframeworks ohne grundlegende Überarbeitungen der Infrastruktur.

Die praktische Relevanz der Erfindung zeigt sich besonders deutlich in verschiedenen sicherheitskritischen Anwendungsszenarien, wo herkömmliche Verschlüsselungsmethoden an ihre Grenzen stoßen.

Im Bankwesen stellt die Erfindung eine besonders wertvolle Lösung dar, da hier das berechtigte Interesse des Clients an der Integrität und Vertraulichkeit der Daten das Verlangen des Man-in-the-Middle überwiegt, die Daten zu beobachten. Banking-Anwendungen übertragen hochsensible Informationen wie Kontostände, Transaktionshistorien, Überweisungsdaten und persönliche Finanzinformationen. Ohne die erfindungsgemäße Lösung kann beispielsweise ein Client nicht sicher mit seiner Bank in Anwesenheit eines Intercepting Proxy kommunizieren, da diese Proxys verschlüsselte Verbindungen erkennen und aufbrechen. Mit der Erfindung wird es möglich, die gesicherte Verbindung durch den Intercepting Proxy aufzubauen, da dieser die Verbindung als harmlos einstuft und aufrechterhält, während tatsächlich eine vollständig sichere interne Kommunikation stattfindet.

Internet of Things (loT) Geräte stellen besondere Herausforderungen für die sichere Kommunikation dar, da sie oft in Netzwerkumgebungen operieren, die nicht vertrauenswürdig sind. Erfindungsgemäß können loT-Protokolle genutzt werden, um eine sichere Kommunikation zwischen Geräten und Servern zu gewährleisten, ohne dass Überwachungssysteme die Existenz verschlüsselter Kanäle erkennen. Dies ist besonders wichtig bei industriellen loT-Anwendungen, wo Sensordaten, Steuerungsbefehle oder Konfigurationsinformationen übertragen werden, die vor unbefugtem Zugriff geschützt werden müssen.

Ein praktisches Beispiel verdeutlicht die Wirksamkeit der Erfindung: Ein Intercepting Proxy überwacht gesicherte TLS-Verbindungen, um sie zu analysieren, und lehnt alles ab, was einer verschlüsselten Verbindung ähnelt. In solchen Umgebungen versagen herkömmliche Sicherheitslösungen vollständig. Die erfindungsgemäße Technologie ermöglicht eine vollständig sichere Verbindung, die vom Intercepting Proxy als normale, unverschlüsselte Kommunikation wahrgenommen wird. Dadurch wird die Verbindung erlaubt und aufrechterhalten, während gleichzeitig die höchsten Sicherheitsstandards gewährleistet werden.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine Anordnung mit Client und Server in einem Netzwerk;
- Figur 2: die Anordnung aus Figur 1 mit Man-in-the-Middle;
- Figur 3: ein System mit zwei Proxys in der Anordnung aus Figur 2;
- Figur 4: das System aus Figur 3 mit einem weiteren Lastverteiler;
- Figur 5: ein Prinzipbild einer Datenübertragung von Client zu Server;
- Figur 6: eine Prinzipschaltung eines Proxys.

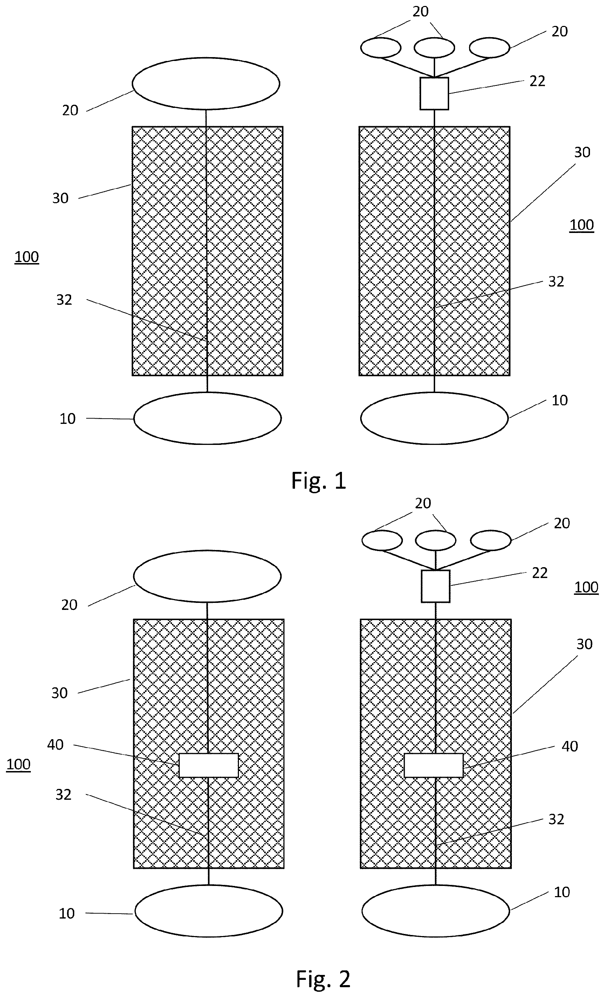

Die Figuren 1 und 2 zeigen herkömmliche Anordnungen 100 mit einem Client 10, einem Server 20 und einem Netzwerk 30, das beispielsweise das Internet sein kann und über welches der Client 10 Nachrichten über einen äußeren Kommunikationskanal 32 an den Server 20 übermittelt. Diese einfache Anordnung 100 ist im linken Bild von Figur 1 gezeigt.

Das rechte Bild von Figur 1 zeigt die Anordnung 100 mit mehreren Servern 20, wobei den Servern 20 ein Lastverteiler 22 vorgeschaltet ist, um den ankommenden Netzwerktraffic auf die mehreren Server 20 zu verteilen.

In Figur 2 werden im linken und rechten Bild jeweils die Anordnungen 100 aus Figur 1 gezeigt, jedoch jeweils mit einem Man-in-the-Middle 40, der ein Intercepting Proxy eines Unternehmens sein kann.

Sichere Verbindungen zwischen Client 10 und Server 20 werden beispielsweise als TLS-Verbindung aufgebaut. Sie werden von dem Man-in-the-Middle 40 blockiert, verändert oder aufgebrochen. Der Man-in-the-Middle 40 kann auch den Inhalt des übertragenen Datenpakets auslesen und beispielsweise auf Schadsoftware oder ähnliches prüfen. Ist der Man-in-the-Middle 40 ein Intercepting Proxy, überwacht er ankommende, gesicherte Verbindungen, um sie zu analysieren und lehnt alles ab, was einer verschlüsselten Verbindung ähnelt. Dies verhindert beispielsweise eine sichere Kommunikation eines Clients 10 mit dem Server 20 einer Bank in Anwesenheit eines Intercepting Proxys.

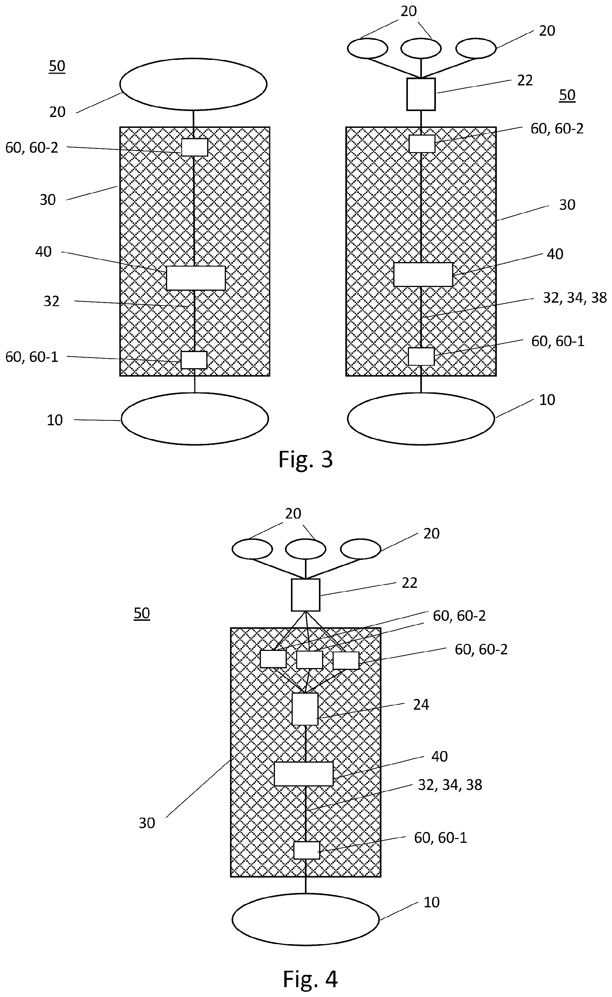

Figur 3 zeigt das erfindungsgemäße System 50 zum Verbergen sicherer Kommunikationskanäle. Das System 50 umfasst zwei Proxys 60, von denen ein (erster) Server 60-1 client-seitig, also in der Nähe des Clients, angeordnet ist. Der andere (zweite) Proxy 60-2 ist serverseitig, also in der Nähe des Servers 20 angeordnet.

Sind mehrere Server 20 vorhanden, die beispielsweise in einer Serverfarm zusammengefasst sind und denen ein Lastverteiler 22 (Server-Lastverteiler) vorgeschaltet ist, so wird der serverseitige Proxy 60-2 in Kommunikationsrichtung vor dem Lastverteiler 22 angeordnet. Der Proxy 60-2 ist in diesem Fall zwischen dem Man-in-the-Middle 40 und dem Lastverteiler 22 installiert, rechtes Bild von Figur 3.

Das erfindungsgemäße System 50 schützt die Kommunikation zwischen Client 10 und Server 20. Dazu ändert das System 50 die zwischen Client 10 und Server 20 ausgetauschten Nachrichten derart, dass ein Dritter, etwa ein Man-in-the-Middle 40, sie nicht wesentlich verändern wird. Hierzu werden die Nachricht oder die umfassenden sicheren Kanaldaten steganografisch verschleiert.

Figur 4 zeigt ein leistungsoptimiertes System 50, bei dem ein zweiter Lastverteiler 24 (Proxy-Lastverteiler) und eine Mehrzahl von Proxy 60 serverseitig eingesetzt werden. In diesem Fall können die serverseitige Leistung und ein hoher Datendurchsatz garantiert werden. Der zweite Lastverteiler 24 verteilt die ankommenden Nachrichten und Daten auf mehrere Proxys 60-2, um die in einem Datencontainer versteckten Daten zu extrahieren. In dem hier gezeigten System 50 werden alle extrahierten sicheren Kanaldaten zu dem Lastverteiler 22 übermittelt und von diesem auf die diversen Server 20 verteilt.

Mittels des Systems 50 gemäß dem Figuren 3 oder 4 kann in einem äußeren Kommunikationskanal 32 ein sicherer Kommunikationskanal eingebettet werden. Beispielsweise ist es möglich eine TLS-Verbindung 38 in den äußeren Kommunikationskanal 32, der beispielsweise eine HTTP-Verbindung 34 sein kann, einzubetten.

In diesem Fall erfolgt eine anfängliche Einrichtung der Kommunikation zwischen Client 10 und Server 20 über den äußeren Kommunikationskanal 32. Der Client 10 baut zunächst eine TLS-Verbindung zu einem Server 20 auf. TLS-Nachrichten und Handshake-Daten werden abgefangen und in HTTP-Requests oder -Responses eingebettet. Beispielsweise kann ein Einbetten in HTTP-Header-Feldern wie Proxy-Authorization, If-Match, If-None-Match oder ETag, in Cookies oder im Datenteil einer POST-Anfrage oder HTTP-Response erfolgen.

Ein TLS-Handshake und eine Datenübertragung folgen. Nach dem TLS-Handshake werden TLS-Pakete durch das erfindungsgemäße Steganographie-Modul des Proxys 60 in unauffällige Datencontainer verpackt. Die Wahl des Datencontainers richtet sich dabei nach der Paketgröße und anderen Parametern. Kleinere Nachrichten finden Platz in HTTP-Headern, während größere Serverantworten in Bilddateien oder anderen umfangreicheren Containern versteckt werden.

Eine bevorzugte Implementierungsvariante platziert die verschlüsselte Client-Nachricht im Authorization-Header, während der zugehörige Entschlüsselungsschlüssel im Dateinamen eines angeforderten Bildes versteckt werden kann. Beide Elemente weisen natürlicherweise hohe Entropie auf, wodurch die versteckten Daten für Überwachungssysteme im Man-in-the-Middle 40 praktisch unerkennbar bleiben und die gesamte Kommunikation zwischen Client 10 und Server 20 als gewöhnliche HTTP-Verbindung 34 erscheint. Der Man-in-the-Middle 40 lässt sie deshalb unverändert passieren.

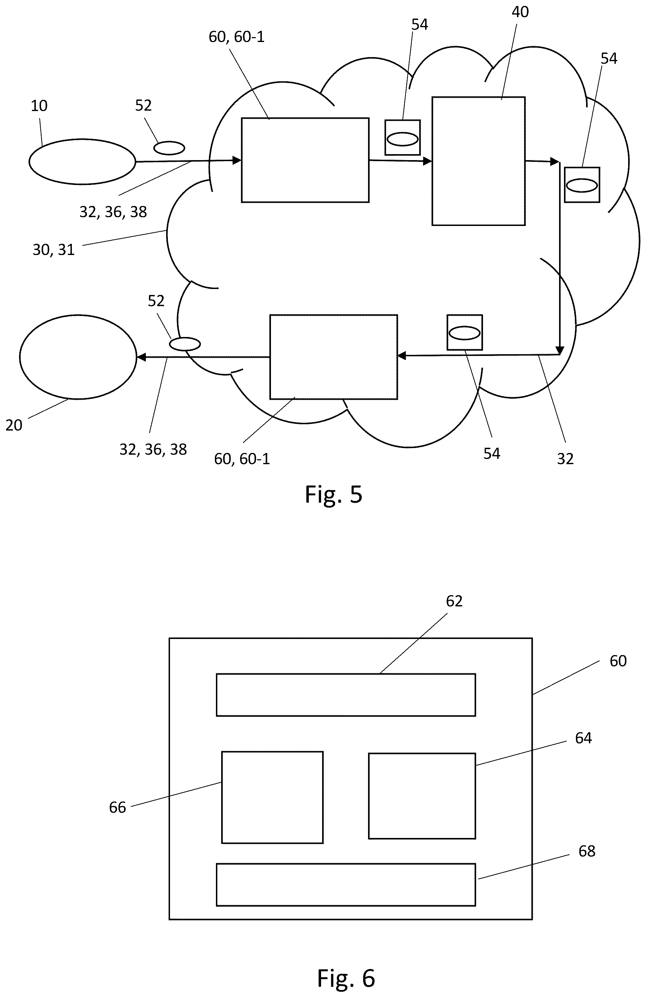

Figur 5 zeigt ein derartiges Beispiel, in dem von einem Client 10 sichere Kanaldaten 52 für einen sicheren Kommunikationskanal 36 an den Proxy 60, 60-1 gesendet werden. Die sicheren Kanaldaten 52 werden in einen unauffälligen Datencontainer 54 eingebettet und in dem Netzwerk 30, das beispielsweise das Internet 31 sein kann, in Richtung Server 20 übertragen. Der unauffällige Datencontainer 54 wird über den äußeren Kommunikationskanal 32 in Richtung Server 20 gesendet und erreicht dabei den Man-in-the-Middle 40. Der äußere Kommunikationskanal 32 kann beispielsweise eine HTTP-Verbindung sein. Da der Datencontainer 54 unauffällig ist, wird er von dem Man-in-the-Middle 40 unverändert weitergeleitet und gelangt zu dem zweiten Proxy 60-2. In dem zweiten Proxy 60-2 wird der Datencontainer 54 extrahiert, sodass die sicheren Kanaldaten 52 entpackt und an den Server 20 gesendet werden. Es kann somit eine Kommunikation zwischen Client 10 und Server 20 etabliert werden, in der auch ein sicherer Kommunikationskanal 32 in Form der sicheren Kanaldaten 52 zwischen Client 10 und Server 20 aufgebaut werden kann. Die sicheren Kanaldaten 52 können beispielsweise eine TLS-Verbindung 38 als sicherer Kommunikationskanal 36 sein.

Figur 6 zeigt den erfindungsgemäßen Proxy 60, der ein Receiver Modul 62 zum Empfangen von sicheren Kanaldaten für einen sicheren Kommunikationskanal 36 hat. Der Proxy 60 umfasst weiter ein Steganografie-Modul 64 zum Einfügen der sicheren Kanaldaten in einen unauffälligen Datencontainer, um die Kanaldaten zu verschleiern.

Das Steganografie-Modul 64 ist bevorzugt auch dazu ausgebildet, einen empfangenden Datencontainer 54 zu entpacken und die darin enthaltenen sicheren Kanaldaten 52 zu extrahieren, damit sie an den Empfänger weitergeleitet werden können.

Ein Einbett-Modul 66 (Embedding Module) fügt den unauffälligen Datencontainer in die Struktur des äußeren Kommunikationskanals 32 ein. Es ist bevorzugt auch geeignet, um den unauffälligen Datencontainer aus der Struktur zu extrahieren.

Der Proxy 60 hat ein Transmitter-Modul 68, das dazu dient, den unauffälligen Datencontainer mit den sicheren Kanaldaten über den äußeren Kommunikationskanal zu übertragen.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert werden. Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

### Glossar

- HTML:: HyperText Markup Language
- HTTP:: Hypertext Transfer Protocol
- HTTPS:: Hypertext Transfer Protocol Secure
- IoT:: Internet of Things
- JSON:: JavaScript Object Notation
- PSK:: Pre-Shared Key
- SMTP:: Secure Mail Transfer Protocol
- SOAP:: Simple Object Access Protocol
- Steganographie:: Technik zum Verbergen von Inhalten in anderen Inhalten
- TLS:: Transport Layer Security
- VPN:: Virtual Private Network

### Bezugszeichenliste

- 10: Client
- 20: Server
- 22: Lastverteiler
- 24: zweiter Lastverteiler
- 30: Netzwerk
- 31: Internet
- 32: äußerer Kommunikationskanal
- 34: HTTP-Verbindung
- 36: sicherer Kommunikationskanal
- 38: TLS-Verbindung
- 40: Man-in-the-Middle
- 50: System
- 52: sichere Kanaldaten
- 54: unauffälliger Datencontainer
- 60: Proxy
- 60-1: erster Proxy
- 60-2: zweiter Proxy
- 62: Receiver Modul
- 64: Steganografie-Modul
- 66: Einbett-Modul
- 68: Transmitter-Modul
- 100: Anordnung

## Patentansprüche

1. Verfahren zum Verbergen sicherer Kommunikationskanäle in einem äußeren Kommunikationskanal (32), wobei das Verfahren umfasst:
Empfangen, an einem ersten Proxy (60-1), von sicheren Kanaldaten (52) für einen sicheren Kommunikationskanal (36) zwischen einem Client (10) und einem Server (20);
steganographisches Einfügen, durch den ersten Proxy (60-1), der sicheren Kanaldaten (52) in einem unauffälligen Datencontainer (54);
Einbetten des unauffälligen Datencontainers (54) in die Struktur des äußeren Kommunikationskanals (32);
Übertragen, durch den ersten Proxy (60-1), des unauffälligen Datencontainers (54), der die sicheren Kanaldaten (52) enthält, über den äußeren Kommunikationskanal (32) zu einem zweiten Proxy (60-2);
Empfangen des unauffälligen Datencontainers (54) über den äußeren Kommunikationskanal (32) in dem zweiten Proxy (60-2);
Extrahieren, durch den zweiten Proxy (60-2), der sicheren Kanaldaten (52) aus dem unauffälligen Datencontainer (54); und
Weiterleiten, durch den zweiten Proxy (60-2), der extrahierten sicheren Kanaldaten (52) an einen beabsichtigten Empfänger.

2. Verfahren nach Anspruch 1, wobei der unauffällige Datencontainer (54) mindestens ein Element der folgenden Gruppe umfasst:
eine Bilddatei, eine Bitmap-Datei, eine Dokumentdatei, eine Videodatei, eine Audiodatei oder ein strukturiertes Datenformat, Daten in Form von SOAP-Requests oder als Session-Token, bevorzugt in verschlüsselter Form.

3. Verfahren nach Anspruch 1 oder 2, wobei der äußere Kommunikationskanal (32) ein Protokoll umfasst, das sich von einem Protokoll des sicheren Kommunikationskanals (36) unterscheidet.

4. Verfahren nach einem der Ansprüche 1 bis 3, ferner umfassend:
Verschlüsseln der sicheren Kanaldaten (52) vor dem steganographischen Einfügen in den unauffälligen Datencontainer (54).

5. Verfahren nach einem der Ansprüche 1 bis 4, wobei der sichere Kommunikationskanal (36) und/oder der äußere Kommunikationskanal (32) auf einem Protokoll ab OSI-Layer 5, bevorzugt ab OSI-Layer 4, besonders bevorzugt ab OSI-Layer 3 basiert und sehr bevorzugt beispielweise eine Transport Layer Security (TLS) Verbindung (38) umfasst und/oder eine HTTP-Verbindung (34) oder -Protokoll oder eine HTTPS-Verbindung oder -Protokoll oder ein SMTP-Protokoll umfasst oder nutzt.

6. Verfahren nach einem der Ansprüche 1 bis 5, ferner umfassend: Verteilen der sicheren Kanaldaten (52) auf eine Vielzahl von unauffälligen Datencontainern (54), bevorzugt in Form von Datenpaketen.

7. Verfahren nach einem der vorhergehenden Ansprüche, **gekennzeichnet durch** wenigstens einen der folgenden Schritte:
Einbetten des unauffälligen Datencontainers (54) in einen Header eines Datenprotokolls des äußeren Kommunikationskanals (32), bevorzugt in den Header eines HTTP-Protokolls, besonders bevorzugt in einen Authorization-Header;
Optionales Einbetten eines Verschlüsselungsschlüssels oder eines Identifikators bei einem verschlüsselten Datencontainer oder verschlüsselten sicheren Daten in dem Datencontainer (54) in einen per Kommunikationskanal (32) zu übertragenden Request;
Einbetten des unauffälligen Datencontainers (54) in eine Antwort in einem Datenprotokoll des äußeren Kommunikationskanals (32), bevorzugt in eine HTTP-Antwort zur Übertragung mittels HTTP-Protokoll und einem angepassten HTTP-Header.

8. Verfahren nach einem der vorhergehenden Ansprüche, **dadurch gekennzeichnet, dass** der Datencontainer (54) in eine Datenstruktur mit möglichst hoher Entropie eingefügt wird oder in einen Bereich der Datenstruktur, die bevorzugt Rauschen umfasst, bevorzugt bei Bildern in den unteren Bits des Bildes, die das Rauschen kennzeichnen.

9. System (50) zum Verbergen sicherer Kommunikationskanäle, wobei das System (50) umfasst:
einen ersten Proxy (60-1), der konfiguriert ist zum:
Empfangen von Daten für einen sicheren Kommunikationskanal (36) zwischen einem Client (10) und einem Server (20),
steganographischen Einfügen der sicheren Kanaldaten (52) in einen unauffälligen Datencontainer (54);
Einbetten des unauffälligen Datencontainers (54) in die Struktur des äußeren Kommunikationskanals (32); und
Übertragen des unauffälligen Datencontainers (54) über den äußeren Kommunikationskanal (32); und
einen zweiten Proxy (60-2), der konfiguriert ist zum:
Empfangen des unauffälligen Datencontainers (54) über den äußeren Kommunikationskanal (32);
Extrahieren der sicheren Kanaldaten (52) aus dem unauffälligen Datencontainer (54), und
Weiterleiten der extrahierten sicheren Kanaldaten (52) an einen beabsichtigten Empfänger.

10. System (50) nach Anspruch 9, ferner umfassend:
einen ersten Lastverteiler (22), der konfiguriert ist, eingehende unauffällige Datencontainer (54) mit sicheren Kanaldaten (52) auf eine Vielzahl von Proxies (60) zu verteilen; und/oder
einen zweiten Lastverteiler (24), der konfiguriert ist, eingehende sichere Kanaldaten (52) auf eine Vielzahl von Proxies (60) zu verteilen.

11. System (50) nach einem der Ansprüche 9 bis 10, wobei der erste Proxy (60-1) ferner konfiguriert ist, die sicheren Kanaldaten (52) zu verschlüsseln, bevor sie steganographisch in den unauffälligen Datencontainer (54) einbettet werden.

12. System (50) nach einem der Ansprüche 9 bis 11, wobei der sichere Kommunikationskanal (36) und/oder der äußere Kommunikationskanal (32) eine Transport Layer Security (TLS) Verbindung (38) umfasst und/oder eine HTTP-Verbindung (34) oder -Protokoll oder eine HTTPS-Verbindung oder -Protokoll oder ein SMTP-Protokoll umfasst oder nutzt.

13. System (50) nach einem der Ansprüche 9 bis 12, ferner umfassend:
mindestens einen ersten Server (20) oder einen Client-Computer (10) in Kommunikation mit dem ersten Proxy (60-1); und
mindestens einen zweiten Server (20) oder Client-Computer (10) in Kommunikation mit dem zweiten Proxy (60-2).

14. Proxy-Server (60) für ein System (50) nach einem der Ansprüche 9 bis 13, umfassend ein Receiver-Modul (62), ein Steganographie-Modul (64) und/oder ein Einbett-Modul (66) und ein Transmitter-Modul (68);
wobei
das Receiver-Modul (62) dazu eingerichtet ist, sichere Kanaldaten (52) für einen sicheren Kommunikationskanal (36) zu empfangen;
das Steganographie-Modul (64) dazu eingerichtet ist, die sicheren Kanaldaten (52) in einen unauffälligen Datencontainer (54) einzufügen und zu verschleiern;
das Einbett-Modul (66) dazu eingerichtet ist, den unauffälligen Datencontainer (54) in die Struktur des äußeren Kommunikationskanals (32) einzubetten;
das Transmitter-Modul (68) dazu eingerichtet ist, den unauffälligen Datencontainer (54) mit den sicheren Kanaldaten (52) über den äußeren Kommunikationskanal (32) zu übertragen.

15. Computerprogrammprodukt, das Anweisungen umfasst, die, wenn sie von einem Computersystem ausgeführt werden, das Computersystem veranlassen, das Verfahren nach einem der Ansprüche 1 bis 9 durchzuführen.
